# EUROPÄISCHE PATENTSCHRIFT

(11) **EP 0 853 925 B1**
(45) Veröffentlichungstag und Bekanntmachung des Hinweises auf die Patenterteilung: **31.03.2004**
(21) Anmeldenummer: 97121339.2
(22) Anmeldetag: 04.12.1997
(51) Int. Cl.: A61C 1/18

(54) **Vorrichtung zur Schmierung von rotierenden Teilen eines zahnärztlichen Handstückes mit flüssigem Schmiermittel**
Device for lubricating the rotating parts of a dental handpiece with liquid lubricants
Dispositif pour graisser les parties rotatives d'une pièce à main dentaire par moyens de lubrifiants liquides

(30) Priorität: 17.12.1996 DE 19652534
(43) Veröffentlichungstag der Anmeldung: 22.07.1998
(73) Patentinhaber: Sirona Dental Systems GmbH, 64625 Bensheim (DE)
(72) Erfinder: Franetzki, Manfred, Dr., 64625 Bensheim (DE); Eglmeier, Hans, Dipl.-Ing., D90419 Nürnberg (DE)
(74) Vertreter: Sommer, Peter

(56) Entgegenhaltungen:
- DE-A- 1 491 038
- DE-A- 2 830 176
- US-A- 3 069 775

## Beschreibung

Die Erfindung bezieht sich auf eine Vorrichtung zur Schmierung von rotierenden Teilen eines zahnärztlichen Handstückes mit einem flüssigen Schmiermittel, welches in dosierter Menge aus einem im Handstück angeordneten Reservoir über Transportmittel den zu schmierenden Teilen zugeführt wird.

Zahnärztliche Handstücke weisen in der Regel mehrere rotierende Teile auf, die im Betrieb einer Reibung unterworfen sind und deshalb in regelmäßigen Abständen geschmiert werden müssen. Solche zu schmierenden Teile können z.B. Getriebeverzahnungen und/oder Wälzlager sein, mit denen die die Verzahnung tragenden Triebwellen im Handstück gelagert sind. Die Intervalle zur Schmierung können unterschiedlich sein; sie sind einerseits durch die Betriebszeit, andererseits durch das nach jedem Gebrauch erforderliche Reinigen, Desinfizieren und Sterilisieren, bei welchem häufig noch vorhandenes Restschmiermittel ausgewaschen wird, festgelegt. Demzufolge müssen in der Praxis die Handstücke mehrmals täglich geschmiert werden. Häufig wird dies durch Einsprühen eines geeigneten Öls, gegebenenfalls unter Zuhilfenahme einer separaten Sprüheinrichtung, durchgeführt.

Um eine dauerhafte Schmierung mit Langzeitwirkung zu erzielen, wurde schon vorgeschlagen, das Schmiermittel mit Hilfe von Druckluft aus im Handstück angeordneten Vorratskammern dosiert zu den rotierenden Teilen zu leiten (US-3 069 775, AT-217 152). Zur dosierten Abgabe des Schmiermittels von der Kammer ist es bekannt, einen Dochtstreifen vorzusehen, an dessen freiem Ende die Druckluft vorbeistreichen und damit Schmiermittel aufnehmen kann.

Das Beimischen von Öl der Druckluft ist mit verschiedenen Nachteilen behaftet. Nachdem die Druckluft teilweise am Kopfende des Handstückes austritt, ist nicht zu vermeiden, daß auch dort Schmiermittel austritt und damit in den Patientenmund gelangen kann. Ein weiterer Nachteil ist darin zu sehen, daß sich in den Leitungswandungen verkrustetes Schmiermittel festsetzen und damit den Querschnitt zusetzen kann. Die vorgenannte Art der Schmierung mit Druckluft als Träger des Schmiermittels ist in der Regel auch nicht zur Schmierung von Handstücken, die mit einem Elektromotorantrieb versehen sind, geeignet.

Auch das weiterhin bekannte direkte tropfenweise Einleiten von Schmiermittel über eine manuell zu öffnende und wieder zu verschließende Bohrung, die das Reservoir mit der Druckluftleitung verbindet (FR-1 216 419), ist mit den vorgenannten Nachteilen behaftet.

Aus der EP-0 228 609 ist es zur Schmierung von Getriebeverzahnungen bekannt, im Bereich der Zahnräder Öffnungen und/oder Kanäle zur Zufuhr von Schmiermittel aus einem im Handstück angeordneten Reservoir zu bringen. Damit das Schmiermittel während des Betriebes nicht aus dem Getriebe austreten kann, ist dort ein Luftführungsteil vorgesehen, welches in der Gehäuseinnenhülse des Handstückes unter Belassung eines geringen Ringspaltes um die Welle herum angeordnet ist und der Schmierung einen Strömungswiderstand entgegensetzt.

Die vorgenannten bekannten Lösungen führten bisher nicht zu der gewünschten feindosierten Zuführung des Schmiermittels an die Verbraucher, also an die rotierenden Teile.

Aufgabe der vorliegenden Erfindung ist es, eine Vorrichtung der eingangs genannten Art zu schaffen, die es ermöglicht, flüssiges Schmiermittel aus dem im Handstück befindlichen Reservoir gezielt in feindosierter Menge zu den Verbrauchern führen zu können, ohne daß die vorgenannten Nachteile in Kauf genommen werden müssen.

Dadurch, daß das Schmiermittel selbsttätig durch Oberflächenspannung oder durch Kapillarkräfte des Schmiermittels transportiert wird, ist erreichbar, daß nur kleinste Mengen an Schmiermittel zugeführt werden, so daß das im Reservoir gespeicherte Schmiermittel über einen längeren Zeitraum, gegebenenfalls über die normalen Serviceintervalle, oder sogar über die gesamte Lebensdauer des Handstückes hinaus, zur Verfügung steht.

Die Transportmittel können ein in das Reservoir eintauchender Docht sein, wobei der Docht zwischen seinen Fasern kleinste, eine Kapillarwirkung erzeugende Kanäle aufweist. Die Kanäle können beispielsweise separate Hohlkanäle sein oder auch durch den Hohl- bzw. Zwischenraum eng aneinanderliegenden Fasern gebildet werden.Eine andere Variante kann darin bestehen, eine Membrane vorzusehen, die eine Vielzahl kleiner, die Abgabemenge bestimmender und auf die Konsistenz des Schmiermittels abgestimmter Austrittsöffnungen enthält. Diese Membrane ist in unmittelbarer Nähe des zu schmierenden Teils angeordnet und kann in einer vorteilhaften Variante zumindest einen Teil des Reservoirs selbst bilden. Eine weitere Variante kann darin bestehen, daß zwischen Schmiermittelreservoir und dem zu schmierenden Teil eine mechanische Verbindung besteht, die so gestaltet ist, daß das Schmiermittel durch Kapillarkräfte aus dem Schmiermittelreservoir zu dem zu schmierenden Teil gefördert wird. Besonders vorteilhaft ist diese Variante, wenn Schmiermittel an ein Zahnrad mit einer Stirnverzahnung zugeführt werden soll, weil man dort das freie Ende der Blattfeder im Zentrum der Stirnverzahnung anliegen lassen kann. An dieser Stelle ist die Umfangsgeschwindigkeit selbst bei hoher Drehzahl praktisch Null, so daß an der Berührungsfläche kaum Verschleiß auftritt.

Die Schmiermittelreservoirs können starre Hohlkörper sein, die mit entsprechenden Ausfluß- und Belüftungsöffnungen versehen sind, wobei die Belüftungsöffnungen so gestaltet sind, daß das Schmiermittel unabhängig von der Lage, die das Instrument einnimmt, nicht auslaufen oder auskriechen kann. Hierzu sind in vorteilhafter Ausgestaltung entsprechende Sperrflächen vorhanden, die teils scharfe Kanten aufweisen können, so daß ein Wegkriechen des Schmiermittels verhindert wird. Die Sperrflächen können auch aus einem ölabstoßendem (oleophobem) Material bestehen oder mit einem solchen Material beschichtet (epilamisiert) sein.

Die Hohlkörper können auch aus elastischem Material bestehen. So ist es z.B. möglich, hierfür einen Kunststoffsack oder einem Kunststoffbalg, der mit zunehmender Leerung zusammenfällt, vorzusehen. Auch eine Zylinder-Kolbenanordnung ist, sofern dies die räumliche Konstellation zuläßt, möglich.

Die Schmiermittelreservoirs sind vorteilhafterweise in unmittelbarer Nähe der zu schmierenden Teile angeordnet. Bei einem Turbinenhandstück beispielsweise sind die Reservoirs zur Schmierung der Lager der Rotorwelle im Kopfgehäuse angeordnet, wobei die Anordnung vorteilhafterweise so getroffen ist, daß die Reservoirs topfförmig um die Lager herum angeordnet sind. In einer weiteren vorteilhaften Ausgestaltung der Erfindung bilden die Reservoirs zusammen mit dem gesamten Rotorpaket eine Baueinheit, die im Kopfgehäuse lösbar gehaltert ist.

Die Anordnung einer Membrane hat, wie bereits erwähnt, insbesondere bei Turbinenhandstücken den Vorteil, daß durch die Membran ein Kapillareffekt erzielt wird, der Schmiermittel von innen nach außen fördert, und das Reservoirinnere gegen einen eventuell anstehenden Luftdruck, z.B. dem Treibluftdruck, mit dem die Turbine angetrieben wird, abschirmt. Dadurch wird ein Leerblasen des Reservoirs durch die Entlüftungsbohrung verhindert.

Mehrere Ausführungsformen der Erfindung werden nachfolgend anhand der Zeichnung näher erläutert.

Es zeigen:
Figur 1 einen Ausschnitt eines zahnärztlichen Turbinenhandstückes im Längsschnitt,
Figur 2 eine Einzelheit aus Figur 1 in schaubildlicher Darstellung,
Figur 3 einen Ausschnitt aus einer Getriebeverbindung in einem zahnärztlichen Handstück,
Figur 4 eine Einzelheit aus Figur 3 in vergrößerter Darstellung,
Figuren 5 und 6 eine Variante zu Figur 4 in einer Prinzipdarstellung.

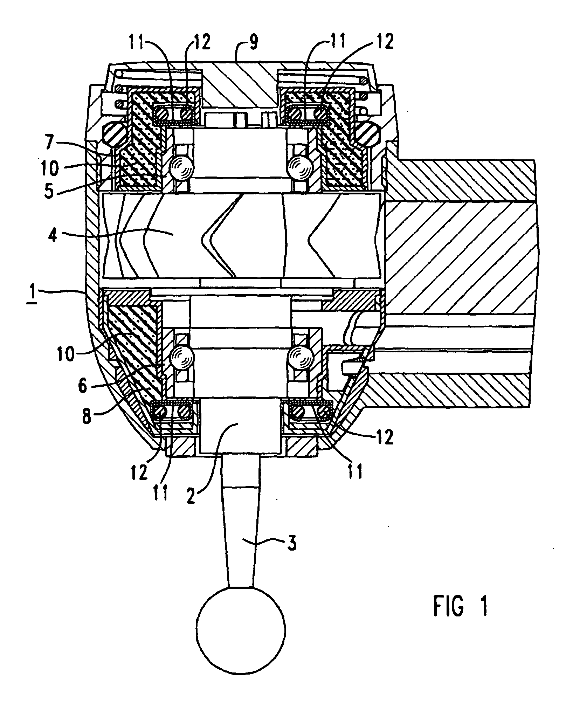

Die Figur 1 zeigt in einer Schnittdarstellung den vorderen Teil eines zahnärztlichen Turbinenhandstückes mit einem Kopfgehäuse 1, in dem in bekannter Weise eine Rotorwelle 2 für ein anzutreibendes Werkzeug 3 gelagert ist. Der Rotor des Turbinenantriebes ist mit 4 bezeichnet, die beiden Wälzlager mit 5 und 6. Das gesamte Rotorpaket, bestehend aus den Teilen 2, 4, 5 und 6 kann, wie später noch näher erläutert, zusammen mit zwei die Lager 5 und 6 topfförmig umgebenden Schmiermittelreservoirs 7 und 8 nach Lösen einer oberen Abdeckung (Druckdeckel 9) aus dem Kopfgehäuse entnommen werden.

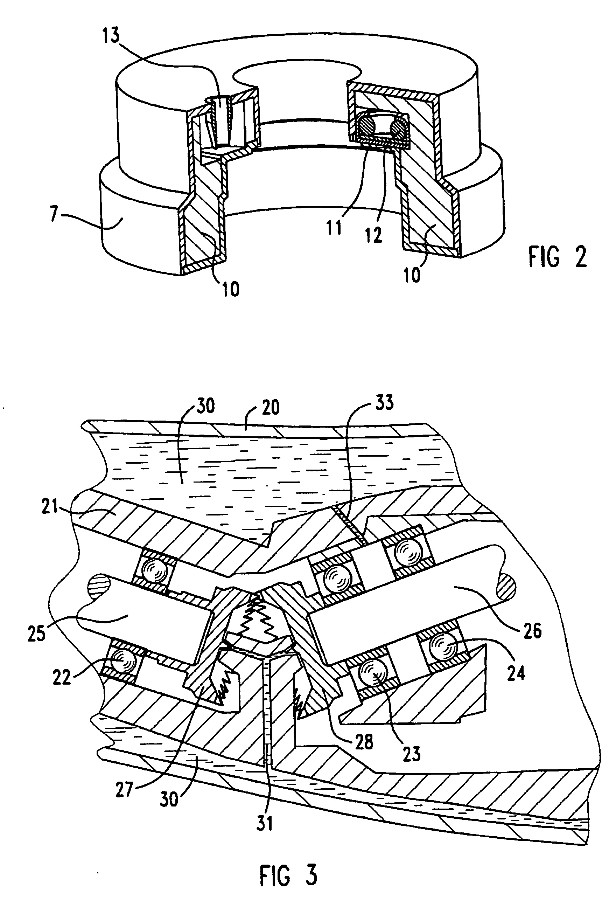

Die beiden Reservoirs 7, 8 sind starre Behältnisse aus Kunststoff oder Metall, die um die Wälzlager 5, 6 herum angeordnet sind. Die Hohlräume sind mit einem geeigneten Strukturschaum 10 ausgefüllt, in dem flüssiges Schmiermittel gebunden werden kann. Das Schaumstoffmaterial ist offenporig, hat ein relativ geringes Eigenvolumen und ist sterilisierbar. Als Schmiermittel kann ein handelsübliches, zur Schmierung für Dentalinstrumente geeignetes, vorzugsweise dünnflüssiges Schmieröl verwendet werden. Typischerweise hat ein solches Öl eine Viskosität von etwa 20 bis 40 mm²/s bei 20°C nach DIN 51561. Benachbart jeweils einem der stirnseitigen Enden der äußeren Laufringe der Wälzlager 5 und 6 sind die Reservoirs am Umfang mit mehreren, nicht näher bezeichneten Öffnungen versehen, die durch plättchen- oder scheibenförmige Membrane 12 abgedeckt sind. Darüber angeordnete O-Ringe 12 dienen zur Halterung der Membrane 11 sowie zur Abdichtung des Reservoirs (Fig. 2). Die Membrane 11 sind sehr feinporig (< 0,2µm) ausgeführt und z.B. aus Polykarbonat gefertigt. Außer der Durchflußbegrenzung für das Schmiermittel dienen die Membrane auch dazu, das Innere der beiden Reservoirs gegen das Eindringen von Druckluft abzuschirmen, mit der der Rotor 4 angetrieben wird. Wegen der feinen Membranporen wirken sehr hohe Kapillarkräfte zwischen den Membranen und dem gespeicherten Schmiermittel, wodurch die Durchlässigkeit der Membrane für Luft erst ab einem bestimmten Grenzdruck ermöglicht ist. Dieser liegt oberhalb des Betriebsdruckes (typischerweise zwischen 1 und 3 bar) des Treibluftdruckes. Ein Leerblasen der beiden Reservoirs über eine deckseitig vorgesehene Entlüftungsbohrung 13 wird so wirksam verhindert.

Die Entlüftungsbohrung 13 weist ein oder mehrere Flächen 14 mit scharfen Kanten auf. Die scharfen Kanten verhindern ein Aus- oder Wegkriechen des Schmiermittels über die Entlüftungsbohrungen bzw. bewirken ein Abreißen des Ölfilms durch die an scharfen Kanten stark geänderte Oberflächenspannung.

Ähnlich scharfe Kanten können auch an anderen Stellen vorgesehen sein, an denen man ein Abreißen des Schmiermittelfilmes erzielen will. Beispielsweise können solche scharfen Kanten an den Übertragungsflächen und/oder an Flächen der zu schmierenden Lagerteile vorhanden sein, und zwar an denjenigen Stellen, wo ein Wegkriechen aus dem Wirkbereich verhindert werden soll. Alternativ können solche Sperrflächen auch aus einem das Schmiermittel abstoßenden Material bestehen oder mit einem derartigen Material beschichtet sein.

Wie bereits erwähnt, sind die beiden Reservoirs 7, 8 so gestaltet und mit den beiden Lagern 5 und 6 so verbunden, daß sie mit dem gesamten Rotorpaket eine Baueinheit bilden. Diese Baueinheit ist im Kopfgehäuse 1 so gehaltert, daß sie bei Bedarf leicht ausgewechselt werden kann.

Die Figur 3 zeigt einen Ausschnitt einer Getriebeverbindung eines zahnärztlichen Handstückes. Die Getriebeverbindung kann im Griff, im Halsteil oder auch zwischen Halsteil und Kopfgehäuse des Handstückes angeordnet sein. In vorliegendem Fall wird eine Anordnung gezeigt, die typischerweise im sogenannten Knickbereich, also an der Übergangsstelle zwischen Griff und Halsteil eines Handstückes liegt. Innerhalb der Handstückhülse 20 ist eine Innenhülse 21 angeordnet, in der mittels Wälzlager 22, 23 und 24 zwei Triebwellen 25, 26 gelagert sind. Die Triebwellenenden enthalten Zahnräder 27, 28 mit einer Stirnverzahnung. Im Freiraum zwischen der Handstückhülse 20 und der Innenhülse 21 befindet sich ein Schmiermittelreservoir 30, welches mit einem geeigneten, das Schmiermittel aufnehmenden Strukturschaum gefüllt sein kann. Vom Reservoir 30 führen Kapillarkanäle 31 in die unmittelbare Nähe des Zentrums der beiden Zahnräder 27, 28.

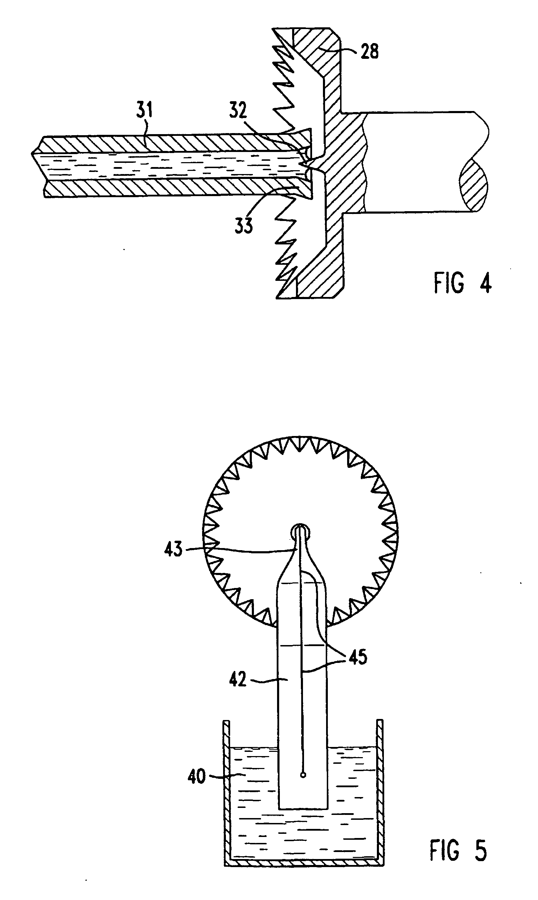

Figur 4 zeigt diesen Bereich in stark vergrößerter Darstellung am Beispiel des Zahnrades 28. Das Zahnrad 28 enthält im Zentrum eine angeformte Spitze 32, die in das dem Zahnrad zugewandte Ende 33 des Kapillarkanals eintaucht.

Das im Hohlraum um die Zahnräder herum bevorratete Schmiermittel wird über die Kapillarkanäle 31 in einem berührungsfreien kapillaren Abstand zur Spitze 32 des Zahnrades 28 geführt. Die Spitze 32 taucht hierzu in das Kanalende ein und berührt dort den Ölmeniskus, ohne die Kanalwandungen selbst zu berühren. Von der Spitze 32 wird das Schmiermittel aufgenommen und, unterstützt durch die Fliehkräfte bei Rotation, zur Verzahnung des Zahnrades 28, und gegebenenfalls zu den benachbart angeordneten Lagern, geführt.

Das so beschriebene Transportmittel kann an allen Zahnradpaaren angebracht sein oder auch nur an den schnellstlaufenden einer Getriebeverzahnung.

Die Versorgung der Wälzlager mit Schmiermittel kann, wie in Fig. 3 dargestellt, über Kapillarkanäle 34 erfolgen, die benachbart den Lagern 23, 24 münden. Das Schmiermittel wird auch hier selbsttätig durch Oberflächenspannung oder durch Kapillarkräfte zu den Lagern geführt. Die Durchflußmenge kann durch eine feinporige Membran gesteuert werden, die im Fließweg beispielsweise in den Kapillarröhrchen 31 oder 33 eingebracht wird. Das Weg- oder Auskriechen des Schmiermittels außerhalb des Wirkbereiches kann durch geeignete Sperrflächen, wie bereits geschildert, verhindert werden.

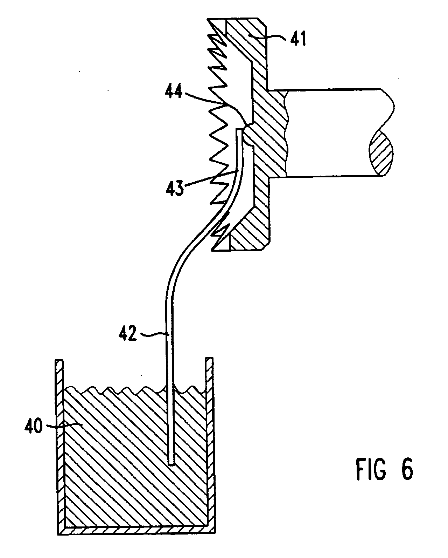

Die Figuren 5 und 6 zeigen in Front- und Seitenansicht eine Variante, bei der der Schmiermitteltransport von einem hier schematisch dargestellten Ölreservoir 40 zu einem Zahnrad 41 durch mechanische Verbindungsmittel erfolgt. Eine geschlitzte Blattfeder 42 taucht mit ihrem einen Ende in das Reservoir 40 ein. Das andere, spitze Ende 43 liegt an einer vorzugsweise kugelkopfförmig ausgebildeten Fläche 44 des Zahnrades 41 federnd an. Der Schlitz 45 bildet hier wiederum eine Kapillare, über die das Schmiermittel aus dem Reservoir angesaugt wird. Nachdem im Zentrum der Halbkugel die Umfangsgeschwindigkeit selbst bei sehr hohen Drehzahlen der Triebwelle praktisch gleich Null ist, tritt an der Berührungsstelle kaum Verschleiß auf. Das Schmiermittel wird über das Kriechen bzw. durch Fliehkräfte bei Rotation von der Mitte des Zahnrades zu den Verzahnungen geführt, wobei der in der Mitte der Blattfeder liegende Spalt 45 das Öl wie in einer Kapillare weiterleitet. Überschüssiges Öl wird von der Verzahnung abgeschleudert und kann zurück in das Reservoir geführt werden.

Besondere Vorteile lassen sich erzielen, wenn die Blattfeder aus einem Bi-Metall gebildet ist, wobei deren Elastizität so eingestellt ist, daß eine Berührung der Spitze der Blattfeder mit dem Kugelkopf 44 erst bei einer bestimmten Temperatur zustande kommt. Diese kann so gelegt werden, daß die Blattfeder bei normaler Betriebstemperatur, also im Bereich der Raumtemperatur und den entsprechenden Zuschlägen für die Erwärmung im Betrieb, nicht zur Anlage kommt, sondern erst bei sehr viel höheren Temperaturen, z.B. bei Erwärmung im Rahmen des Reinigungs- bzw. Desinfektionsprozesses. Auf diese Weise kann eine Schmierung während bzw. auch nach der Reinigungsphase bis zur Abkühlung des Handstückes durchgeführt werden.

## Patentansprüche

1. Zahnärztliches Handstück mit einer Vorrichtung zur Schmierung von rotierenden Teilen (5, 6; 22-24; 27, 28, 41) mit einem flüssigen Schmiermittel, welches in dosierter Menge aus einem im Handstück angeordneten Reservoir (7, 8 30, 40) über Transportmittel den Teilen zugeführt wird, **dadurch gekennzeichnet, daß** die Transportmittel (11, 31, 32, 42, 43) so beschaffen sind, daß das Schmiermittel vom Reservoir (7, 8, 30, 40) zu den Teilen selbsttätig durch Oberflächenspannung oder durch Kapillarkräfte des Schmiermittels transportiert wird.

2. Zahnärztliches Handstück nach Anspruch 1, **dadurch gekennzeichnet, daß** Mittel vorhanden sind, die den Schmiermittelfluß auf ein nötiges Maß begrenzen.

3. Zahnärztliches Handstück nach Anspruch 1, **dadurch gekennzeichnet, daß** die Transportmittel einen mit seinem einen Ende in das Reservoir eintauchenden und mit seinem anderen Ende an den zu schmierenden Teilen anliegenden Docht umfassen, der zwischen seinen Fasern kleine, eine Kapillarwirkung erzeugende Kanäle aufweist.

4. Zahnärztliches Handstück nach Anspruch 1, **dadurch gekennzeichnet, daß** die Transportmittel eine das Reservoir (7, 8) zumindest teilweise begrenzende Membrane (11) umfassen, wobei die Membrane eine Vielzahl kleiner, die Abgabemenge bestimmender und auf die Konsistenz des Schmiermittels abgestimmter Austrittsöfffnungen enthält.

5. Zahnärztliches Handstück nach Anspruch 1, **dadurch gekennzeichnet, daß** die Transportmittel zwei mechanisch sich-berührende Teile (42, 43) umfassen, von denen das eine mit dem Reservoir (40)verbunden ist und das andere an dem zu schmierenden Teil (41) anliegt.

6. Zahnärztliches Handstück nach Anspruch 5, **dadurch gekennzeichnet, daß** die Transportmittel durch eine geschlitzte Blattfeder (42) gebildet werden, die mit ihrem einen Ende in das Reservoir (40) eintaucht und mit ihrem anderen spitzen Ende an einer Fläche (44) des rotierenden Teils(41) anliegt.

7. Zahnärztliches Handstück nach einem der Ansprüche 1 bis 6, **dadurch gekennzeichnet, daß** das Reservoir (7, 8; 30, 40) ein starrer Hohlkörper ist, der mindestens eine Belüftungsöffnung (13)enthält, wobei die Belüftungsöffnung so gestaltet ist, daß ein unkontrollierter Ausfluß des Schmiermittels, unabhängig von der Lage der Öffnung im Raum, verhindert wird.

8. Zahnärztliches Handstück nach Anspruch 7, **dadurch gekennzeichnet, daß** ein in das Reservoir (7, 8) eintauchender und die Belüftungsöffnung (13) enthaltender Kanal vorgesehen ist, der Flächen (14) mit umlaufenden scharfen Kanten aufweist.

9. Zahnärztliches Handstück nach Anspruch 7, **dadurch gekennzeichnet, daß** der Hohlkörper mit einem das Schmiermittel aufnehmenden Schaumstoff (10) versehen ist.

10. Zahnärztliches Handstück nach einem der Ansprüche 1 bis 6, **dadurch gekennzeichnet, daß** als Reservoir ein Hohlkörper mit elastischen Wandungen vorgesehen ist.

11. Zahnärztliches Handstück nach einem der Ansprüche 1 bis 6, **dadurch gekennzeichnet, daß** als Reservoir ein zylindrisches Behältnis mit einem darin angeordnetem Kolben vorgesehen ist.

12. Zahnärztliches Handstück nach einem der vorangegangenen Ansprüche, **dadurch gekennzeichnet, daß** das Reservoir (7, 8, 30) den unmittelbar an das zu schmierende Teil (5, 6; 22-24; 27, 28, 41) angrenzenden Freiraum des Handstückes ausfüllt.

13. Zahnärztliches Handstück nach einem der vorangegangenen Ansprüche, **dadurch gekennzeichnet, daß** zur Schmierung der Lager (5, 6) einer im Kopfgehäuse (1) des Handstückes gelagerten Rotorwelle (2) zumindest für das eine Lager (5, 6) das Reservoir (7, 8) als das Lager konzentrisch umgebender topfförmiger Ring ausgebildet ist, wobei die Transportmittel (11) die Austrittsöffnung mit dem einen Laufring dieses Lagers (5, 6) verbinden.

14. Zahnärztliches Handstück nach Anspruch 1 , **dadurch gekennzeichnet, daß** das Reservoir (7, 8) zumindest mit dem einen Lager (5, 6), vorzugsweise mit dem gesamten, Rotor (4) und Rotorwelle (2) einschließenden Rotorpaket eine Baueinheit bildet, die im Kopfgehäuse (1) des Handstückes herausnehmbar gehaltert ist.

15. Zahnärztliches Handstück nach Anspruch 1 , **dadurch gekennzeichnet, daß** das Reservoir (7, 8) stirnseitig einen abnehmbaren Deckel enthält.

16. Zahnärztliches Handstück nach Anspruch 13, **dadurch gekennzeichnet, daß** das Reservoir (7, 8) dem Lager (5, 6) zugewandt an einer Austrittsöffnung mit einer für das Schmiermittel durchlässigen Membrane (11) versehen ist.

17. Zahnärztliches Handstück nach Anspruch 16, **dadurch gekennzeichnet, daß** die Porenöffnungen der Membrane < 0,2 µm betragen.

18. Zahnärztliches Handstück nach einem der Ansprüche 1 bis 17, **dadurch gekennzeichnet, daß** die Übertragungsflächen und/oder Flächen der zu schmierenden Teile Mittel enthalten, die das Wegkriechen des Schmiermittels aus dem Wirkbereich zumindest teilweise verhindern bzw. ein Abreißen des Schmiermittelfilms bewirken.

19. Zahnärztliches Handstück nach Anspruch 18, **dadurch gekennzeichnet, daß** die Mittel durch Sperrflächen gebildet werden, die aus einem das Schmiermittel abstoßendem Material bestehen oder mit einem derartigen Material beschichtet sind.

20. Zahnärztliches Handstück nach Anspruch 18, **dadurch gekennzeichnet, daß** die Mittel durch an Flächen der Übergangsstellen und/oder an Begrenzungsflächen der zu schmierenden Teile angeordnete, das Wegkriechen des Schmiermittels verhindernde bzw. das Abreißen des Schmiermittelfilms bewirkende scharfe Kanten gebildet sind.

21. Zahnärztliches Handstück nach Anspruch 1 , **dadurch gekennzeichnet, daß** zur Schmierung von Lagern (22-24) und/oder Getriebeverzahnungen (25-28) im Handstück mehrere, vom Reservoir (30) aus zu den zu schmierenden Teilen (22-24; 27, 28) verlaufende Kapillarkanäle (31) vorgesehen sind, an deren Mündungsöffnungen das Schmiermittel abgegeben wird.

22. Zahnärztliches Handstück nach Anspruch 21, **dadurch gekennzeichnet, daß** die Mündungsöffnung berührungsfrei in einem kapillaren Abstand auf korrespondierend dazu im Zentrum der Zahnräder (27, 28) angeordnete Spitzen (32) ausgerichtet sind.

23. Zahnärztliches Handstück nach Anspruch 21, **dadurch gekennzeichnet, daß** die Kapillarkanäle (31) eine die Zufuhrmenge des Schmiermittels steuernde Membrane enthalten.

24. Zahnärztliches Handstück nach Anspruch 23, **dadurch gekennzeichnet, daß** die Kapillarkanäle (45) durch geschlitzte Blattfedern (42) gebildet werden, die mit ihren einen Enden in das Reservoir (40) eintauchen und mit ihren anderen Enden stirnseitig im Zentrum der Zahnräder(41) anliegen.

25. Zahnärztliches Handstück nach Anspruch 24, **dadurch gekennzeichnet, daß** die Zentren der Zahnräder (41) an der die Blattfedern (42) anliegen, halbkugelförmig ausgebildet sind.

26. Zahnärztliches Handstück nach Anspruch 25, **dadurch gekennzeichnet, daß** die Blattfedern (42) Bimetall-Federn sind, deren Biegeverhalten so gewählt ist,daß deren Spitzen erst bei einer deutlich über Raumtemperatur liegenden Temperatur an den Zahnrädern (41) anliegen.

## Claims

1. A dental hand instrument having a contrivance for the lubrication of rotating parts (5, 6; 22-24; 27, 28, 41) with a liquid lubricant, which is fed to the parts at a metered rate from a reservoir (7, 8, 30, 40) disposed in the hand instrument, via means of transportation, **characterized in that** the means of transportation (11, 31, 32, 42, 43) are such that the lubricant is transported from the reservoir (7, 8, 30, 40) to the parts automatically by the surface tension or the capillary forces of the lubricant.

2. A dental hand instrument as defined in claim 1, **characterized in that** means are provided to restrict the flow of lubricant to a required rate.

3. A dental hand instrument as defined in claim 1, **characterized in that** the means of transportation comprise a wick, one end of which is submerged in the reservoir whilst its other end bears against the parts to be lubricated, which wick has, between its fibers, small channels producing a capillary action.

4. A dental hand instrument as defined in claim 1, **characterized in that** the means of transportation comprise a membrane (11) at least partially delimiting the reservoir (7, 8), and said membrane contains a large number of small outlet orifices which determine the discharge rate and are adapted to suit the consistency of the lubricant.

5. A dental hand instrument as defined in claim 1, **characterized in that** the means of transportation comprise two mechanically touching parts (42, 43), one of which is connected to the reservoir (40) whilst the other bears against the part to be lubricated (41).

6. A dental hand instrument as defined in claim 5, **characterized in that** the means of transportation are formed by a slotted leaf spring (42), of which one end dips into the reservoir (40) whilst the other, pointed end bears against a surface (44) of the rotating part (41).

7. A dental hand instrument as defined in any one of claims 1 to 6, **characterized in that** the reservoir (7, 8; 30, 40) is a rigid hollow part containing at least one vent hole (13), said vent hole being such that uncontrolled effluence of the lubricant is prevented, irrespective of the position of the hole in space.

8. A dental hand instrument as defined in claim 7, **characterized in that** a channel is provided which dips into the reservoir (7, 8) and contains said vent hole (13), which exhibits surfaces (14) having peripheral sharp edges.

9. A dental hand instrument as defined in claim 7, **characterized in that** said hollow part is provided with a piece of foamed plastics material (10) for the accommodation of lubricant.

10. A dental hand instrument as defined in any one of claims 1 to 6, **characterized in that** the reservoir is a hollow part having resilient walls.

11. A dental hand instrument as defined in any one of claims 1 to 6, **characterized in that** the reservoir is a cylindrical container in which there is disposed a piston.

12. A dental hand instrument as defined in any one of the previous claims, **characterized in that** the reservoir (7, 8, 30) occupies the free space of the hand instrument directly adjacent the part to be lubricated (5, 6; 22-24; 21, 28, 41).

13. A dental hand instrument as defined in any one of the previous claims, **characterized in that** for lubrication of the bearing (5, 6) of a rotor shaft (2) mounted in the head casing (1) of the hand instrument, the reservoir (7, 8) is in the form of a pot-type ring concentrically surrounding the bearing at least in the case of one of the bearings (5, 6), and the means of transportation (11) connect the outlet orifice to the raceway of said bearing (5, 6).

14. A dental hand instrument as defined in claim 1, **characterized in that** the reservoir (7, 8) forms a structural unit with at least one bearing (5, 6), preferably with the entire rotor package comprising the rotor (4) and rotor shaft (2), this structural unit being removably mounted in the head casing (1) of the hand instrument.

15. A dental hand instrument as defined in claim 1, **characterized in that** the reservoir (7, 8) has a removable lid at one end thereof.

16. A dental hand instrument as defined in claim 13, **characterized in that** the reservoir (7, 8) is provided, at an outlet orifice facing the bearing (5, 6), with a membrane (11), which is permeable to the lubricant.

17. A dental hand instrument as defined in claim 16, **characterized in that** the pore diameters of the membrane are < 0.2 µm.

18. A dental hand instrument as defined in any one of claims 1 to 17, **characterized in that** the transfer surfaces and/or the surfaces of the parts to be lubricated contain means for at least partially preventing the lubricant from creeping away from the site of action or for causing the film of lubricant to become detached.

19. A dental hand instrument as defined in claim 18, **characterized in that** said means are in the form of barrier surfaces which consist of a lubricant-repellent material or are coated with such a material.

20. A dental hand instrument as defined in claim 18, **characterized in that** said means are in the form of sharp edges situated at surfaces of the transition points and/or at boundary surfaces of the parts to be lubricated and adapted to prevent creeping of the lubricant or to cause the film of lubricant to become detached.

21. A dental hand instrument as defined in claim 1, **characterized in that** for lubrication of bearings (22-24) and/or gearing (25-28) in the hand instrument there are provided a number of capillary channels (31) which extend from the reservoir (30) to the parts to be lubricated (22-24; 27, 28) and which dispense the lubricant at their outlet orifices.

22. A dental hand instrument as defined in claim 21, **characterized in that** said outlet orifices are oriented toward corresponding sharp points (32) disposed in the center of the gear wheels (27, 28), said orifices being at a capillary distance from said sharp points without contacting the same.

23. A dental hand instrument as defined in claim 21, **characterized in that** the capillary channels (31) contain a membrane which controls the feed rate of the lubricant.

24. A dental hand instrument as defined in claim 23, **characterized in that** the capillary channels (45) are in the form of slotted leaf springs (42) of which one end dips into the reservoir (40) and the other end thereof bears against the face of a gear wheel (41) at the center thereof.

25. A dental hand instrument as defined in claim 24, **characterized in that** the centers of the gear wheels (41), against which the leaf springs (42) bear, have a semispherical shape.

26. A dental hand instrument as defined in claim 25, **characterized in that** the leaf springs (42) are bimetal springs having flexural properties which cause them to bear against the gear wheels (41) only when the temperature is distinctly higher than room temperature.

## Revendications

1. Pièce à main de dentiste avec un dispositif pour la lubrification de pièces rotatives (5, 6 ; 22 - 24 ; 27, 28, 41) avec un lubrifiant liquide, qui est amenée aux pièces dans une quantité dosée à partir d'un réservoir (7, 8, 30, 40) disposé dans la pièce à main par des moyens de transport, **caractérisée en ce que** les moyens de transport (11, 31, 32, 42. 43) sont constitués de telle sorte que le lubrifiant est transporté du réservoir (7, 8, 30, 40) aux pièces automatiquement par tension de surface ou par des forces capillaires du lubrifiant.

2. Pièce à main de dentiste selon la revendication 1, **caractérisée en ce qu'**il existe des moyens qui limitent le flux de lubrifiant à une quantité nécessaire.

3. Pièce à main de dentiste selon la revendication 1, **caractérisée en ce que** les moyens de transport comprennent une mèche plongeant par l'une de ses extrémités dans le réservoir et s'appuyant par son autre extrémité sur les pièces à lubrifier, laquelle mèche présente de petits canaux générant un effet capillaire entre ses fibres.

4. Pièce à main de dentiste selon la revendication 1, **caractérisée en ce que** les moyens de transport comprennent une membrane (11) délimitant au moins partiellement le réservoir (7, 8), moyennant quoi la membrane contient une pluralité de petits orifices de sortie qui déterminent la quantité distribuée et adaptées à la consistance du lubrifiant.

5. Pièce à main de dentiste selon la revendication 1, **caractérisée en ce que** les moyens de transport comprennent deux pièces (42, 43) qui bougent mécaniquement, dont l'une est reliée au réservoir (40) et l'autre s'appuie sur la pièce (41) à lubrifier.

6. Pièce à main de dentiste selon la revendication 5, **caractérisée en ce que** les moyens de transport sont formés par un ressort à lame (42) fendu, qui plonge par l'une de ses extrémités dans le réservoir (40) et s'appuie par son autre extrémité pointue sur une surface (44) de la pièce rotative (41).

7. Pièce à main de dentiste selon l'une quelconque des revendications 1 à 6, **caractérisée en ce que** le réservoir (7, 8 ; 30, 40) est un corps creux rigide qui contient au moins une ouverture de ventilation (13), l'ouverture de ventilation étant conçue de façon à empêcher une sortie non contrôlée du lubrifiant, indépendamment de la position de l'ouverture dans l'espace.

8. Pièce à main de dentiste selon la revendication 7, **caractérisée en ce qu'**il est prévu un canal plongeant dans le réservoir (7, 8) et contenant l'ouverture de ventilation (13), qui présente des surfaces (14) avec des arêtes tranchantes périphériques.

9. Pièce à main de dentiste selon la revendication 7, **caractérisée en ce que** le corps creux est pourvu d'un produit alvéolaire (10) recevant le lubrifiant.

10. Pièce à main de dentiste selon l'une quelconque des revendications 1 à 6, **caractérisée en ce qu'**il est prévu comme réservoir un corps creux avec des parois élastiques.

11. Pièce à main de dentiste selon l'une quelconque des revendications 1 à 6, **caractérisée en ce qu'**il est prévu comme réservoir un récipient cylindrique avec un piston disposé à l'intérieur.

12. Pièce à main de dentiste selon l'une quelconque des revendications précédentes, **caractérisée en ce que** le réservoir (7, 8, 30) remplit l'espace libre de la pièce à main qui est directement contiguë à la pièce à lubrifier (5, 6 ; 22 - 24 ; 27, 28, 41).

13. Pièce à main de dentiste selon l'une quelconque des revendications précédentes, **caractérisée en ce que**, pour que la lubrification des paliers (5, 6) d'un arbre rotor (2) logé dans le boîtier supérieur (1) de la pièce à main, le réservoir (7, 8) est conçu au moins pour un palier (5, 6) en tant que bague en forme de pot et entourant le palier de façon concentrique, les moyens de transport (11) reliant l'orifice de sortie à une bague de roulement de ce palier (5, 6).

14. Pièce à main de dentiste selon la revendication 1, **caractérisée en ce que** le réservoir (7, 8) forme au moins avec l'ensemble rotor incluant un palier (5, 6), de préférence avec l'ensemble du rotor (4) et l'arbre rotor (2) une unité modulaire qui est maintenue de manière extractible dans le boîtier supérieur (1) de la pièce à main.

15. Pièce à main de dentiste selon la revendication 1, **caractérisée en ce que** le réservoir (7, 8) contient sur le côté avant un couvercle amovible.

16. Pièce à main de dentiste selon la revendication 13, **caractérisée en ce que** le réservoir (7, 8) est pourvu d'une membrane (11) perméable pour le lubrifiant sur un orifice de sortie, tournée vers le palier (5, 6).

17. Pièce à main de dentiste selon la revendication 16, **caractérisée en ce que** les orifices de pores de la membrane sont inférieurs à 0,2 µm.

18. Pièce à main de dentiste selon l'une quelconque des revendications 1 à 17, **caractérisée en ce que** les surfaces de transfert et/ou les surfaces des pièces à lubrifier contiennent des moyens qui empêchent au moins partiellement l'enlèvement par glissement du lubrifiant de la zone d'action ou entraînent un décollement du film lubrifiant.

19. Pièce à main de dentiste selon la revendication 18, **caractérisée en ce que** les moyens sont constitués par des surfaces de blocage qui sont composées dans un matériau repoussant le lubrifiant ou sont revêtues d'un matériau de ce type.

20. Pièce à main de dentiste selon la revendication 18, **caractérisée en ce que** les moyens sont constitués par des arêtes tranchantes disposées sur des surfaces des points de transition et/ou des surfaces de délimitation des pièces à lubrifier, empêchant le glissement du lubrifiant ou entraînant le décollement du film lubrifiant.

21. Pièce à main de dentiste selon la revendication 1, **caractérisée en ce que**, pour la lubrification de paliers (22 - 24) et/ou de dentures d'engrenage (25 - 28), il est prévu dans la pièce à main plusieurs canaux capillaires (31) allant du réservoir (30) aux pièces à lubrifier (22 - 24 ; 27 - 28), canaux aux orifices de sortie desquels le lubrifiant est évacué.

22. Pièce à main de dentiste selon la revendication 21, **caractérisée en ce que** les orifices de sortie sont orientés sans contact à une distance capillaire vers des extrémités (32) disposées au centre des roues dentées (27, 28) par rapport à cette distance.

23. Pièce à main de dentiste selon la revendication 21, **caractérisée en ce que** les canaux capillaires (31) contiennent une membrane qui commande la quantité d'arrivée du lubrifiant.

24. Pièce à main de dentiste selon la revendication 23, **caractérisée en ce que** les canaux capillaires (45) sont formés par des ressorts à lame (42) fendus qui plongent avec l'une de leurs extrémités dans le réservoir (40) et s'appuient avec leurs autres extrémités côté avant au centre des roues dentées (41).

25. Pièce à main de dentiste selon la revendication 24, **caractérisée en ce que** les centres des roues dentées (41), sur lesquels les ressorts à lame (42) s'appuient, sont formés avec une forme semisphérique.

26. Pièce à main de dentiste selon la revendication 25, **caractérisée en ce que** les ressorts à lame (42) sont des ressorts bimétalliques, dont le comportement à la flexion est choisi de telle sorte que leurs extrémités ne s'appuient sur les roues dentées (41) qu'à une température située nettement au-dessus de la température ambiante.
